# EUROPÄISCHE PATENTSCHRIFT

(11) **EP 1 535 402 B1**
(45) Veröffentlichungstag und Bekanntmachung des Hinweises auf die Patenterteilung: **20.01.2010**
(21) Anmeldenummer: 03793590.5
(22) Anmeldetag: 06.08.2003
(51) Int. Cl.: H04B 1/40

(54) **SCHALTUNGSANORDNUNG MIT HOCHFREQUENZMISCHER UND EMPFÄNGERANORDNUNG MIT DER SCHALTUNGSANORDNUNG**
CIRCUIT ARRANGEMENT COMPRISING A HIGH-FREQUENCY MIXER AND A RECEIVER DEVICE PROVIDED WITH THE CIRCUIT ARRANGEMENT
CIRCUIT EQUIPE D'UN MELANGEUR HAUTE FREQUENCE ET DISPOSITIF RECEPTEUR POURVU DE CE CIRCUIT

(30) Priorität: 29.08.2002 DE 10239855
(43) Veröffentlichungstag der Anmeldung: 01.06.2005
(73) Patentinhaber: Infineon Technologies AG, 85579 Neubiberg (DE)
(72) Erfinder: SCHMIDT, Axel, 31515 Wunstorf (DE)
(74) Vertreter: Viering, Jentschura & Partner
(86) Internationale Anmeldenummer: PCT/DE2003/002639
(87) Internationale Veröffentlichungsnummer: WO 2004/023669

(56) Entgegenhaltungen:
- WO-A-02/27953
- US-A- 6 029 052
- US-B1- 6 405 025

## Beschreibung

Die vorliegende Erfindung betrifft eine Schaltungsanordnung mit Hochfrequenzmischer sowie eine Empfängeranordnung mit der Schaltungsanordnung.

Insbesondere im Mobilfunk besteht die Tendenz zu sogenannten Mehrband- oder Multiband-Empfängern, welche zum Empfang von Funksignalen auf unterschiedlichen Frequenzbändern ausgelegt sind. Beispielsweise in Deutschland existieren zwei unterschiedliche Frequenzbänder für den GSM(Global System for Mobile communication)-Mobilfunkstandard, nämlich bei 900 Mhz und bei 1800 Mhz. Während die sogenannten D-Netze im Frequenzbereich um 900 Mhz arbeiten, ist den sogenannten E-Netzen ein Frequenzbereich um 1800 Mhz zugewiesen. Mobilfunkgeräte, die auf beiden Frequenzebenen senden und empfangen können, werden als Dualband-Geräte bezeichnet.

Um im Rahmen der Globalisierung der Märkte und der hohen Mobilität der Nutzer Mobilfunkgeräte weltweit einsetzbar zu machen, ist es wünschenswert, in nur einem Gerät neben den Frequenzbereichen um 900 und 1800 Mhz auch andere Frequenzbereiche wie beispielsweise GSM 1900 und GSM 800, wie sie beispielsweise in den USA vorkommen, zugänglich zu machen.

In den Empfangssignalpfaden derartiger Mobilfunkempfänger besteht nun die Problematik, Kanalfilter, Verstärker etc. für diese verschiedenen Frequenzbänder geeignet auszuführen. Multibandempfänger werden normalerweise so ausgelegt, daß für jedes Empfangsband ein eigener Empfangspfad vorgesehen ist.
Dieser umfaßt neben einem Kanalfilter einen speziell angepaßten rauscharmen Vorverstärker, sowie einen eigenen Abwärts-Frequenzmischer.

Die Dokumente WO 02/27953, US 6,029,052 und US6,405,025 beschreiben jeweils verschiedene Ausführungen von Empfängern. Jeder Empfänger enthält mehrere parallel angeordnete Empfängerpfade mit jeweils einem rauscharmen Verstärker. Die Ausgänge der Verstärker, welche voneinander getrennt ausgeführt sind, sind mit einem gemeinsam genutzten Hochfrequenzmischer gekoppelt. Jeder Verstärker ist zur Verstärkung eines durch einen Mobilfunkstandard vorbestimmten Signals ausgebildet.

Nachteilig bei einer derartigen Receiver-Architektur ist der verhältnismäßig große Bauteilaufwand und der damit verbundene Flächenaufwand bei der Integration solcher Schaltungen.

Aufgabe der vorliegenden Erfindung ist es, eine Schaltungsanordnung mit Hochfrequenzmischer sowie eine Empfängeranordnung mit dieser Schaltungsanordnung anzugeben, welche auf einer geringeren Fläche integrierbar ist und dennoch gute Hochfrequenzeigenschaften hat.

Erfindungsgemäß wird die Aufgabe bezüglich der Schaltungsanordnung gelöst durch eine Schaltungsanordnung mit Hochfrequenzmischer, aufweisend:
- den Hochfrequenzmischer mit einem ersten Eingang, mit einem zweiten Eingang und mit einem Ausgang,
- einen ersten Vorverstärker mit einem Eingang und mit einem Ausgang, der mit dem ersten Eingang des Hochfrequenzmischers gekoppelt ist,
- ein Mittel zum Ein- und Ausschalten des ersten Vorverstärkers, das mit dem ersten Vorverstärker gekoppelt ist,
- einen zweiten Vorverstärker mit einem Ausgang, der unter Bildung eines gemeinsamen Ausgangsknotens an den Ausgang des ersten Vorverstärkers angeschlossen ist, und
- ein Mittel zum Ein- und Ausschalten des zweiten Vorverstärkers, das mit dem zweiten Vorverstärker gekoppelt ist.

Gemäß dem vorliegenden Prinzip kann ein gemeinsamer Hochfrequenzmischer verwendet werden, der von unterschiedlichen, für verschiedene Frequenzbänder ausgelegten Empfangspfaden angesteuert wird. Somit ist der Chipflächenbedarf eines auf einer derartigen Schaltungsanordnung basierenden Multibandempfängers deutlich reduziert. Die Vorverstärker der vorliegenden Schaltungsanordnung haben einen gemeinsamen Ausgang, der mit dem gemeinsamen Hochfrequenzmischer gekoppelt ist.

Es entspricht dem vorliegenden Prinzip, daß bei Mehrbandempfängern darauf verzichtet werden kann, für jeden Empfangspfad einen separaten Hochfrequenzmischer zur Nutzsignalverarbeitung vorzusehen.

Die Kopplung des gemeinsamen Ausgangsknotens der Vorverstärker mit dem Hochfrequenzmischer erfolgt bevorzugt über eine Koppelkapazität.

Durch den gemeinsamen Ausgangsknoten und den gemeinsamen Hochfrequenzmischer wird auch die kapazitive Last an dem jeweils eingeschalteten Vorverstärker deutlich verringert, wodurch die Hochfrequenzeigenschaften verbessert sind.

Aufgrund der Mittel zum Ein- und Ausschalten der Vorverstärker können diese mit Vorteil unabhängig voneinander und je nach dem gewünschten Empfangsband ein- und ausgeschaltet werden.

Die Eingangstransistoren der Vorverstärker sind jeweils bevorzugt als ein- und ausschaltbare Dioden beschaltet.

Die Vorverstärker haben bevorzugt nicht nur einen gemeinsamen Ausgangsknoten, sondern auch eine gemeinsame elektrische Last, welche bevorzugt als Stromquelle gegen Versorgungspotential ausgeführt ist.

Erster und zweiter Vorverstärker können in einer bevorzugten Ausführungsform der Erfindung an die speziellen Anforderungen des jeweiligen Frequenzbandes, für das sie benutzt werden sollen, angepaßt sein.

Der Hochfrequenzmischer ist bevorzugt als breitbandiger Mischer ausgelegt.

Die Vorverstärker sind bevorzugt als rauscharme Vorverstärker, sogenannte LNA, Low Noise Amplifier, ausgelegt.

Es liegt selbstverständlich im Rahmen der Erfindung, das vorliegende Prinzip auf Anordnungen mit drei oder mehr Vorverstärkern anzuwenden. Dabei haben alle Vorverstärker einen gemeinsamen Ausgangsknoten. Bevorzugt ist jeder Vorverstärker einem Frequenzband und/oder einem Modulationsverfahren zugeordnet.

Bezüglich der Empfängeranordnung wird die Aufgabe gelöst durch eine Empfängeranordnung mit einer Schaltungsanordnung wie vorstehend beschrieben, umfassend
- ein Mittel zum Einkoppeln eines hochfrequenten Signals,
- einen ersten Empfangspfad aufweisend ein erstes Bandpaßfilter mit einem Eingang, der mit dem Mittel zum Einkoppeln eines hochfrequenten Signals gekoppelt ist, und mit einem Ausgang sowie aufweisend den ersten Vorverstärker, dessen Eingang mit dem Ausgang des ersten Bandpaßfilters gekoppelt ist, und
- einen zweiten Empfangspfad aufweisend ein zweites Bandpaßfilter mit einem Eingang, der mit dem Mittel zum Einkoppeln eines hochfrequenten Signals gekoppelt ist, und mit einem Ausgang sowie aufweisend den zweiten Vorverstärker, dessen Eingang mit dem Ausgang des zweiten Bandpaßfilters gekoppelt ist.

Gemäß dem vorgeschlagenen Prinzip sind in einem Dualbandempfänger oder Multibandempfänger zwei Empfangspfade vorgesehen, die eingangsseitig bevorzugt an eine gemeinsame Antenne oder an je eine zugeordnete, separate Antenne angekoppelt sind. Anstelle der Antenne kann auch ein anders Mittel zum Einkoppeln eines hochfrequenten Signals vorgesehen sein.

Die Empfangspfade weisen jeweils einen Vorverstärker auf, wobei die beiden Vorverstärker einen gemeinsamen Ausgangsknoten haben. Der gemeinsame Ausgangsknoten ist wiederum an einen gemeinsamen Abwärts-Frequenzmischer angekoppelt.

Zusätzlich zu den bereits erläuterten Vorteilen hat die Implementierung der Schaltungsanordnung mit Hochfrequenzmischer gemäß vorliegendem Prinzip in einer Empfängeranordnung den Vorteil, daß die beiden Empfangspfade, beispielsweise bezüglich der Bandpaßfilter, exakt und mit hoher Selektion an das jeweils zugeordnete Frequenzband angepaßt werden können.

Ebenso können auch die Vorverstärker, die den Bandpaßfiltern nachgeschaltet sind, an das jeweils zugeordnete Empfangsband angepaßt werden und demnach verschieden ausgelegt sein. Trotz dieser vorteilhaften Anpaßbarkeit der für die Kanalselektion entscheidenden Bauteile kann mit dem vorliegenden Prinzip dennoch signifikant Chipfläche dadurch eingespart werden, daß ein gemeinsamer Abwärtsfrequenzmischer verwendet wird.

Da bei der beschriebenen, bevorzugten Ankopplung des gemeinsamen Ausgangsknotens über eine Koppelkapazität an den Mischereingang auf weitere, jedem Vorverstärker zugeordnete Koppelkapazitäten verzichtet werden kann, ergibt sich eine zusätzliche Verbesserung der Hochfrequenzeigenschaften des Dualbandempfängers.

Gemäß einer bevorzugten Weiterbildung ist eine Steuereinrichtung vorgesehen, welche über die Mittel zum Ein- und Ausschalten der Vorverstärker diese unabhängig voneinander zu-und abschalten kann. Von den mehreren Vorverstärkern ist maximal einer gleichzeitig eingeschaltet. Hierdurch ist eine weitere Rauschverbesserung erzielt, sowie zudem der Stromverbrauch des Empfängers insgesamt reduziert.

Es liegt im Rahmen der Erfindung, daß sowohl die Schaltungsanordnung mit Hochfrequenzmischer, als auch die Empfängeranordnung mit der Schaltungsanordnung dadurch weitergebildet werden, daß dritte, vierte oder noch weitere Vorverstärker vorgesehen sind, welche jeweils unabhängig voreinander zu- und abschaltbar ausgeführt sind. Hierdurch kann der Dualbandempfänger in einfacher Weise als Tribandempfänger oder allgemein als Multibandempfänger weitergebildet werden.

Weitere Einzelheiten und vorteilhafte Ausgestaltungen der vorliegenden Erfindung sind Gegenstand der Unteransprüche.

Die Erfindung wird nachfolgend an mehreren Ausführungsbeispielen anhand von Zeichnungen näher erläutert.

Es zeigen:
- Figur 1: ein Ausführungsbeispiel einer Schaltungsanordnung mit Hochfrequenzmischer gemäß dem vorliegendem Prinzip, an den eingangsseitig drei Vorverstärker angeschlossen sind, und
- Figur 2: einen beispielhaften Dualbandempfänger mit der Verschaltung von Vorverstärkern und Hochfrequenzmischern gemäß Figur 1 in zwei Empfangspfaden.

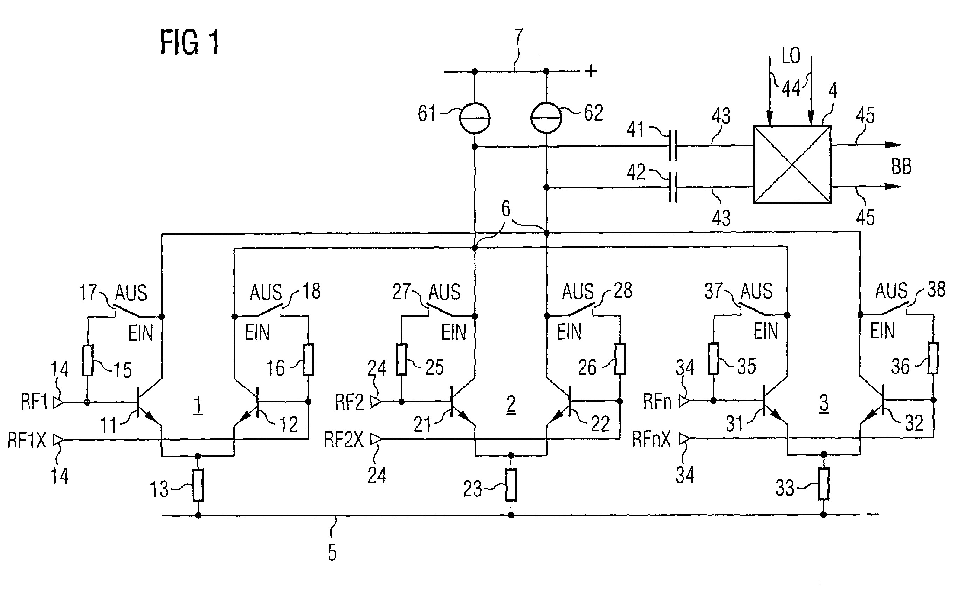

Figur 1 zeigt drei Vorverstärker 1 bis 3 mit einem gemeinsamen Ausgangsknoten 6, an dem ein gemeinsamer, breitbandiger Hochfrequenzmischer 4 angeschlossen ist.

Erster, zweiter und dritter Vorverstärker 1 bis 3 sind als rauscharme Vorverstärker, sogenannte Low Noise Amplifier, LNA ausgebildet und jeweils in symmetrischer Schaltungstechnik aufgebaut. Jeder Vorverstärker 1 bis 3 umfaßt zwei emittergekoppelte NPN-Bipolartransistoren 11, 12; 21, 22; 31, 32. Der gemeinsame Emitterknoten der paarweise miteinander verschalteten Verstärkertransistoren 11, 12; 21, 22; 31,32 ist über je einen Widerstand 13, 23, 33 an einen gemeinsamen Bezugspotentialanschluß 5 angeschlossen. Jeder Vorverstärker 1, 2, 3 weist einen separaten Hochfrequenzeingang 14, 24, 34 auf, mit jeweils zwei Eingangsklemmen, von denen je eine mit je einem zugeordneten Basisanschluß eines Verstärkertransistors 11, 12; 21, 22; 31,32 verbunden ist. An den Hochfrequenzeingängen 14, 24, 34 ist je ein differentielles Signal RF1,RF 1X; RF2, RF2X; RFn, RFnX zuführbar. An diese Eingänge 14, 24, 34 sind jeweils Empfangssignalpfade eines Funkempfängers anschließbar, welche für unterschiedliche Frequenzbänder oder Modulationsverfahren ausgelegt sind. Die Kollektoranschlüsse der Transistoren 11, 12; 21, 22; 31, 32 sind jeweils paarweise miteinander in einem gemeinsamen Ausgangsknoten 6 verbunden, das heißt, daß die Kollektoranschlüsse der Transistoren 11, 21, 31 miteinander in einem Knoten verbunden sind und die Kollektoranschlüsse der Transistoren 12, 22, 32 in einem weiteren Schaltungsknoten miteinander verbunden sind, der gemeinsam mit dem ersten Knoten den symmetrischen Ausgangsknoten 6 der Vorverstärker 1 bis 3 bildet.

Um die Vorverstärker 1 bis 3 unabhängig voneinander ein- und auszuschalten, ist je ein Pfad zwischen Basisanschluß und Kollektoranschluß der Transistoren 11, 12; 21, 22; 31, 32 vorgesehen, welcher jeweils eine Serienschaltung aus einem Widerstand 15, 16, 25, 26, 35, 36 und einem Schalter 17, 18, 27, 28, 37, 38 umfaßt. Die einem Vorverstärker 1, 2, 3 zugeordneten, beiden Schalter, 17, 18; 27, 28; 37, 38 werden jeweils paarweise gemeinsam ein- und ausgeschaltet. Im geöffneten Zustand der Schalter ist der jeweils zugeordnete Vorverstärker 1, 2, 3 ausgeschaltet. Zum Einschalten eines der Vorverstärker 1 bis 3 wird das diesem zugeordnete Schalterpaar 17, 18; 27, 28; 37, 38 geschlossen. Die beiden anderen Schalterpaare bleiben geöffnet. Der symmetrische Ausgangsknoten 6, der allen Vorverstärkern 1 bis 3 gemeinsam ist, ist über je eine für alle Vorverstärker gemeinsame Stromquelle 61, 62 an einen Versorgungspotentialanschluß 7 gelegt.

Weiterhin ist der symmetrische Ausgang 6 über je einen Serienkondensator 41, 42 an den für differentielle Signalübertragung ausgelegten ersten Eingang 43 des Hochfrequenzmischers 4 angeschlossen. Ein zweiter Eingang 44 des Hochfrequenzmischers 4 ist zur Zuführung eines Lokaloszillatorsignals mit um neunzig Grad zueinander phasenverschobenen Signalanteilen ausgelegt. Am Ausgang des Mischers 4, der mit Bezugszeichen 45 versehen und ebenfalls symmetrisch ausgelegt ist, kann ein Basisbandsignal BB oder ein Zwischenfrequenzsignal, je nach Architektur des Empfängers, abgegriffen werden.

Bei der vorliegenden Schaltungsanordnung haben die Vorverstärker 1 bis 3, die jeweils verschiedenen Empfangspfaden zugeordnet sind, einen gemeinsamen Ausgang 6, der mit dem dazugehörigen Mischer 4 verbunden ist. Somit sind mit Vorteil lediglich zwei Koppelkapazitäten 41, 42 pro Mischereingang 43 vorhanden. Hierdurch wiederum ist am Ausgang des jeweils aktiven rauscharmen Vorverstärkers 1 bis 3 eine besonders geringe kapazitive Last vorhanden. Somit weist die Schaltung verbesserte Hochfrequenzeigenschaften auf.

Um die Vorverstärker 1 bis 3 unabhängig voneinander ein- und ausschalten zu können, sind die Eingangstransistoren 11, 12, 21, 22, 31, 32 als schaltbare Dioden verschaltet.

Die Schaltungsanordnung von Figur 1 ist mit Vorteil beispielsweise in einem Tribandempfänger einsetzbar. Mit einem derartigen Tribandempfänger können beispielsweise die Mobilfunkstandards GSM 900, GSM 1800 und GSM 1900 verarbeitet werden.

Das beschriebene Prinzip ist selbstverständlich auch bei lediglich zwei Vorverstärkern anwendbar oder alternativ auf eine beliebige Anzahl von Vorverstärkern und Empfangspfaden erweiterbar.

In alternativen Ausführungsformen können anstelle der Widerstände 13, 23, 33 auch Stromquellen vorgesehen sein.

Anstelle der Stromquellen 61, 62 können in alternativen Ausführungsformen beliebige andere, auch komplexe elektrische Lasten vorgesehen sein.

Zwischen den Kollektoranschlüssen der Differenzverstärkertransistoren und dem gemeinsamen Ausgangsknoten 6 kann je ein Kaskodetransistor vorgesehen sein. Hierdurch wird eine weitere Erhöhung der Isolation erzielt.

Zwischen die rauscharmen Vorverstärkern 1, 2, 3 und den Mischer 4 kann in alternativen Ausführungen eine zusätzliche Verstärkerstufe eingeschaltet sein.

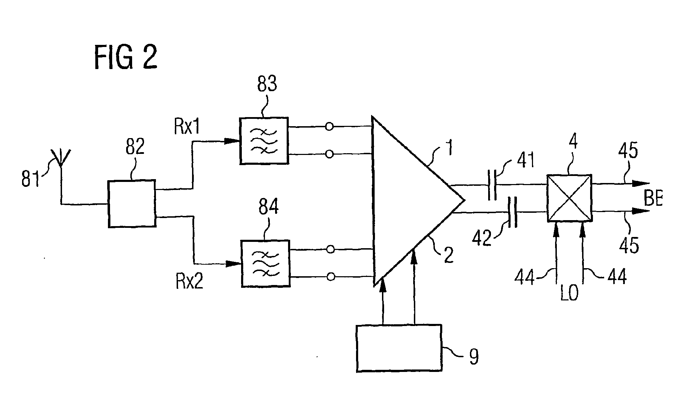

Figur 2 zeigt beispielhaft die Anwendung des Prinzips von Figur 1 in einem Dualbandempfänger mit zwei Empfangspfaden RX1, RX2. Dort ist an eine Antenne 81 ein Koppelglied 82 angeschlossen, mit einem ersten Ausgang, der mit einem ersten Oberflächenwellenfilter 83, und einem zweiten Ausgang, der mit einem zweiten Oberflächenwellenfilter 84 verbunden ist. Die Oberflächenwellenfilter 83, 84 dienen zur Selektion des jeweils dem Empfangspfad RX1, RX2 zugeordneten Frequenzbandes und zur Unterdrückung unerwünschter Frequenzanteile. An die Ausgänge der Filter 83, 84 ist je ein Vorverstärker 1, 2, wie in Figur 1 dargestellt und miteinander verschaltet, vorgesehen. Die Schalter 17, 18; 27, 28 der Vorverstärker 1, 2 sind mit ihren Steuereingängen an eine Ansteuerschaltung 9 angeschlossen, die den jeweils gewünschten Vorverstärker aktiviert. Wie in Figur 1 sind die Ausgänge der Vorstärker 1, 2 über Koppelkapazitäten 41, 42 an einen ersten Eingang des Hochfrequenzmischers 4, der als Abwärtsmischer ausgelegt ist, angeschlossen. Der zweite Eingang 44 dient zum Zuführen eines Lokaloszillatorsignals LO. Am Ausgang 45 ist ein Basisbandsignal BB abgreifbar.

Man erkennt deutlich die mit dem vorliegenden Prinzip mögliche Chipflächenersparnis. Bei der Darstellung von Figur 2 ist trotz der Möglichkeit, verschiedene Frequenzbänder verarbeiten zu können, lediglich ein gemeinsamer Abwärts-Frequenzmischer 4 erforderlich. Auf Grund des gemeinsamen Ausgangsknotens 6 der Vorverstärker 1, 2 ist auch die durch die Koppelkapazitäten 41, 42 bedingte kapazitive Last verhältnismäßig gering.

Selbstverständlich liegt es im Rahmen der Erfindung, das gezeigte Prinzip auch auf Empfänger mit mehr als zwei Frequenzbändern anzuwenden, beispielsweise auf Tribandempfänger.

Anstelle der in Figur 1 gezeigten Schaltungsrealisierung in differentieller, bipolarer Schaltungstechnik ist auch eine Realisierung in sogenannter Single-Ended-Schaltungstechnik und/oder in CMOS-Schaltungstechnik im Rahmen der Erfindung möglich.

### Bezugszeichenliste

- 1: Vorverstärker
- 2: Vorverstärker
- 3: Vorverstärker
- 4: Mischer
- 5: Bezugspotentialanschluß
- 6: Ausgangsknoten
- 7: Versorgungspotentialanschluß
- 9: Steuerschaltung
- 11: Transistor
- 12: Transistor
- 13: Widerstand
- 14: Eingang
- 15: Widerstand
- 16: Widerstand
- 17: Schalter
- 18: Schalter
- 21: Transistor
- 22: Transistor
- 23: Widerstand
- 24: Eingang
- 25: Widerstand
- 26: Widerstand
- 27: Schalter
- 28: Schalter
- 31: Transistor
- 32: Transistor
- 33: Widerstand
- 34: Eingang
- 35: Widerstand
- 36: Widerstand
- 37: Schalter
- 38: Schalter
- 41: Kapazität
- 42: Kapazität
- 43: Eingang
- 44: Eingang
- 45: Ausgang
- 61: Stromquelle
- 62: Stromquelle
- 81: Antenne
- 82: Koppelglied
- 83: Bandpaßfilter
- 84: Bandpaßfilter
- BB: Basisband
- LO: Lokaloszillatorsignal
- RX1: Empfangspfad
- RX2: Empfangspfad
- RF1: Hochfrequenzsignal
- RF1X: Hochfrequenzsignal
- RF2: Hochfrequenzsignal
- RF2X: Hochfrequenzsignal
- RFn: Hochfrequenzsignal
- RFnX: Hochfrequenzsignal

## Patentansprüche

1. Schaltungsanordnung mit Hochfrequenzmischer (4), aufweisend
- den Hochfrequenzmischer (4) mit einem ersten Eingang (43), mit einem zweiten Eingang (44) und mit einem Ausgang (45),
- einen ersten Vorverstärker (1) mit einem Eingang (14) und mit einem Ausgang (6),
- ein Mittel zum Ein- und Ausschalten (17) des ersten Vorverstärkers (1), das mit dem ersten Vorverstärker (1) gekoppelt ist,
- einen zweiten Vorverstärker (2) mit einem Ausgang, der unter Bildung eines gemeinsamen Ausgangsknotens (6) an den Ausgang des ersten Vorverstärkers (1) angeschlossen ist, und
- ein Mittel zum Ein- und Ausschalten (27) des zweiten Vorverstärkers (2), das mit dem zweiten Vorverstärker (2) gekoppelt ist,
wobei der gemeinsame Ausgangsknoten (6) mit dem ersten Eingang (43) des Hochfrequenzmischers (4) gekoppelt ist und über eine gemeinsame Stromquelle (61) mit einem Versorgungspotentialanschluß (7) gekoppelt ist.

2. Schaltungsanordnung nach Anspruch 1,
**dadurch gekennzeichnet, daß**
zur Kopplung des gemeinsamen Ausgangsknotens (6) mit dem ersten Eingang (43) des Hochfrequenzmischers (4) eine Koppelkapazität (41) vorgesehen ist.

3. Schaltungsanordnung nach Anspruch 1 oder 2,
**dadurch gekennzeichnet, daß**
der erste und der zweite Vorverstärker (1, 2) jeweils einen Transistor in Emitterschaltung (11, 21) umfassen, mit einem Basisanschluß, der mit dem Eingang (14, 24) des jeweiligen Vorverstärkers (1, 2) verbunden ist, mit einem Kollektoranschluß, der an den gemeinsamen Ausgangsknoten (6) angeschlossen ist und mit einem Emitteranschluß, der mit einem Bezugspotentialanschluß (5) gekoppelt ist.

4. Schaltungsanordnung nach Anspruch 3,
**dadurch gekennzeichnet, daß** das Mittel zum Ein- und Ausschalten (17, 27) des ersten und des zweiten Vorverstärkers (1, 2) jeweils als Schalter ausgeführt ist, mit einem ersten Anschluß, der mit dem Basisanschluß des Transistors (11, 21) im jeweiligen Vorverstärker (1, 2) angekoppelt ist, und mit einem zweiten Anschluß, der mit dem Kollektoranschluß, des Transistors (11, 21) im jeweiligen Vorverstärker (1, 2) gekoppelt ist.

5. Schaltungsanordnung nach einem der Ansprüche 1 bis 4,
**dadurch gekennzeichnet, daß**
der erste Vorverstärker (1), der zweite Vorverstärker (2) und der Hochfrequenzmischer (4) in symmetrischer Schaltungstechnik ausgeführt sind.

6. Empfängeranordnung mit einer Schaltungsanordnung nach einem der Ansprüche 1 bis 5, umfassend
- ein Mittel zum Einkoppeln eines hochfrequenten Signals (81),
- einen ersten Empfangspfad (Rx1) aufweisend ein erstes Bandpaßfilter (83) mit einem Eingang, der mit dem Mittel zum Einkoppeln eines hochfrequenten Signals (81) gekoppelt ist, und mit einem Ausgang sowie aufweisend den ersten Vorverstärker (1), dessen Eingang mit dem Ausgang des ersten Bandpaßfilters (83) gekoppelt ist, und
- einen zweiten Empfangspfad (Rx2) aufweisend ein zweites Bandpaßfilter (84) mit einem Eingang, der mit dem Mittel zum Einkoppeln eines hochfrequenten Signals (81) gekoppelt ist, und mit einem Ausgang sowie aufweisend den zweiten Vorverstärker (2), dessen Eingang mit dem Ausgang des zweiten Bandpaßfilters (84) gekoppelt ist.

7. Empfängeranordnung nach Anspruch 6,
**dadurch gekennzeichnet, daß**
eine Steuereinrichtung (9) vorgesehen ist, mit einem ersten Ausgang, der mit einem Steuereingang des Mittels zum Ein- und Ausschalten (17) des ersten Vorverstärkers (1) gekoppelt ist, und mit einem zweiten Ausgang, der mit einem Steuereingang des Mittels zum Ein- und Ausschalten (27) des zweiten Vorverstärkers (2) gekoppelt ist.

## Claims

1. Circuit arrangement with a high frequency mixer (4) comprising
- the high frequency mixer (4) comprising a first input (43), a second input (44), and an output (45),
- a first preamplifier (1) comprising an input (14) and an output (6),
- a means for turning on and off (17) the first preamplifier (1) wherein the means is coupled with the first preamplifier (1),
- a second preamplifier (2) comprising an output connected to the output of the first preamplifier (1) by forming a common output node (6), and
- a means for turning on and off (27) the second preamplifier (2) wherein the means is coupled with the second preamplifier (2),
wherein the common output node (6) is coupled with the first input (43) of the high frequency mixer (4) and is coupled via a common current source (61) with a supply voltage connector (7).

2. Circuit arrangement according to claim 1,
**characterised by** that
for coupling the common output node (6) with the first input (43) of the high frequency mixer (4) a coupling capacitance (41) is provided.

3. Circuit arrangement according to claim 1 or claim 2,
**characterised by** that
the first and the second preamplifiers (1, 2) each comprise a common-emitter transistor (11,21) with a base connector connected with the input (14, 24) of the respective preamplifier (1, 2), with a collector connector connected to the common output node (6), and with an emitter connector coupled with a reference potential connector (5).

4. Circuit arrangement according to claim 3,
**characterised by** that
the means for turning on and off (17, 27) the first and the second preamplifier (1, 2) is in each case formed as a switch with a first connector coupled with the base connector of the transistor (11, 21) in the respective preamplifier (1, 2) and with a second connector coupled with the collector connector of the transistor (11, 21) in the respective preamplifier (1, 2).

5. Circuit arrangement according to one of claims 1 to 4,
**characterised by** that
the first preamplifier (1), the second preamplifier (2), and the high frequency mixer (4) are implemented in balanced circuit technology.

6. Receiver arrangement with a circuit arrangement according to one of claims 1 to 5 comprising
- a means for coupling in a high frequency signal (81),
- a first reception path (Rx1) comprising a first bandpass filter (83) with an input coupled with the means for coupling in a high frequency signal (81) and with an output, and comprising the first preamplifier (1) whose input is coupled with the output of the first bandpass filter (83), and
- a second reception path (Rx2) comprising a second bandpass filter (84) with an input coupled with the means for coupling in a high frequency signal (81) and an output, and comprising the second preamplifier (2) whose input is coupled with the output of the second bandpass filter (84).

7. Receiver arrangement according to claim 6,
**characterised by** that
a control device (9) is provided, with a first output coupled with a control input of the means for turning on and off (17) the first preamplifier (1), and with a second input coupled with a control input of the means for turning on and off (27) the second preamplifier (2).

## Revendications

1. Circuit ayant un mélangeur (4) haute fréquence, comportant
- le mélangeur (4) haute fréquence, ayant une première entrée (43), une deuxième entrée (44) et une sortie (45),
- un premier préamplificateur (1), ayant une entrée (14) et une sortie (6),
- un moyen pour mettre en circuit et mettre hors circuit (17) le premier préamplificateur (1), qui est couplé au premier préamplificateur (1),
- un deuxième préamplificateur (2), ayant une sortie et raccordé en formant un noeud (6) commun de sortie, à la sortie du premier préamplificateur (1), et
- un moyen de mise en circuit et hors circuit (27) du deuxième préamplificateur (2), qui est couplé au deuxième préamplificateur (2),
dans lequel le noeud (6) commun de sortie est couplé à la première entrée (43) du mélangeur (4) haute fréquence et est couplé à une borne (7) de potentiel d'alimentation par l'intermédiaire d'une source (61) commune de courant.

2. Circuit suivant la revendication 1,
**caractérisé en ce que**
une capacité (41) de couplage est prévue pour le couplage du noeud (6) commun de sortie à la première entrée (43) du mélangeur (4) haute fréquence.

3. Circuit suivant la revendication 1 ou 2,
**caractérisé en ce que**
le premier et le deuxième préamplificateurs (1, 2) comprennent respectivement un transistor dans un circuit (11, 21) d'émetteur, ayant une borne de base, qui est reliée à l'entrée (14, 24) du préamplificateur (1, 2) respectif, une borne de collecteur, qui est reliée au noeud (6) commun de sortie, et une borne d'émetteur, qui est couplée à une borne (5) de potentiel de référence.

4. Circuit suivant la revendication 3,
**caractérisé en ce que**
le moyen de mise en circuit et hors circuit (17, 27) du premier et du deuxième préamplificateurs (1, 2) est réalisé respectivement sous la forme d'un commutateur ayant une première borne, qui est couplée à la borne de base du transistor (11, 21) du préamplificateur (1, 2) respectif et une deuxième borne, qui est couplée à la borne de collecteur du transistor (11, 21) du préamplificateur (1, 2) respectif.

5. Circuit suivant l'une des revendications 1 à 4,
**caractérisé en ce que**
le premier préamplificateur (1), le deuxième préamplificateur (2) et le mélangeur (4) haute fréquence sont réalisés en technique de circuit symétrique.

6. Dispositif de récepteur ayant un circuit suivant l'une des revendications 1 à 5, comprenant
- un moyen d'injection d'un signal (81) de haute fréquence,
- un premier trajet (Rx1) de réception, ayant un premier filtre (83) passe-bande ayant une entrée, qui est couplée au moyen d'injection d'un signal (81) de haute fréquence, et ayant une sortie, ainsi que comportant le premier préamplificateur (1) dont l'entrée est couplée à la sortie du premier filtre (83) passe-bande, et
- un deuxième trajet (Rx2) de réception, comportant un deuxième filtre (84) passe-bande ayant une entrée, qui est couplée au moyen d'injection d'un signal (81) de haute fréquence, et une sortie ainsi que comportant le deuxième préamplificateur (2), dont l'entrée est couplée à la sortie du deuxième filtre (84) passe-bande.

7. Dispositif de réception suivant la revendication 6,
**caractérisé en ce que**
il est prévu un dispositif (9) de commande ayant une première sortie, qui est couplée à une entrée de commande du moyen de mise en circuit et hors circuit (17) du premier préamplificateur (1), et ayant une deuxième sortie, qui est couplée à une entrée de commande du moyen de mise en circuit et hors circuit (27) du deuxième préamplificateur (2).
